Europäisches Patentamt

European Patent Office

Office européen des brevets

(11) Publication number: **0 463 659 A1**

# EUROPEAN PATENT APPLICATION

(21) Application number: **91201379.4**

(22) Date of filing: **05.06.91**

(51) Int. Cl.⁵: **F42B 5/16, F02K 9/14**

(30) Priority: **25.06.90 SE 9002236**
**25.06.90 SE 9002237**

(43) Date of publication of application:
**02.01.92 Bulletin 92/01**

(84) Designated Contracting States:
**AT DE ES FR GB IT**

(71) Applicant: **Swedish Ordnance - FFV/Bofors AB**
**c/o Gedda & Ekdahl Advokatbyra, Stureplan 2**
**S-114 35 Stockholm(SE)**

(72) Inventor: **Pramskog, Torbjörn**
**Almvägen 12**
**S-635 06 Eskilstuna(SE)**
Inventor: **Andersson, Sven**
**Torshällavägen 5C**
**S-633 44 Eskilstuna(SE)**

(74) Representative: **Nydell, Peder et al**
**Nydells Patentbyra Fridhemsgatan 13**
**S-392 37 Kalmar(SE)**

(54) **Projectile with propellant powder in the form of elongated powder strips.**

(57) A projectile with propellant powder in the form of elongated powder strips (18). The strips are positioned in the charge room of the projectile by a cylindric support (25) arranged behind the projectile (1) and able to be fastened to the tail portion (5) thereof. The support (25) has radial projections (26-28), forming therebetween compartments, in which the strips are arranged. A locking ring (31) is arranged to enhance the positioning of the strips (18).

FIG. 1

TECHNICAL FIELD

The present invention relates to a projectile with a propellant powder in the form of elongated powder strips orientated in the length direction of the projectile in a charge room which extends, at least partially, behind the tail portion of the projectile. The invention relates to finned projectiles and projectiles without fins as well.

BACKGROUND PRIOR ART

It is generally known to design the propellant powder for finned shells in the form of powder tape which presents a large and almost constant combustion area during the combustion of the powder. Such a powder tape is arranged in the form of elongated rectangular strips which are disposed in the charge room of the shell between the fins in parallel with the longitudinal axis of the shell. The charge room thereby consists of the space which surrounds the tail portion (which may be finned) of the shell, and possibly also extends at a distance behind the tail portion, and which space is outwardly limited by the usual cartridge case, to which the shell is fastened. When using caseless ammunition, for instance in one-shot weapons, the charge room is instead limited by the barrel of the weapon.

It is, for several reasons, desirable to hold the strips together in bundles. Thereby, one can prevent, for instance in recoilless weapons, portions of the strips from being expelled backwards through the ventury of the weapon. The bundling of the strips will also prevent any uneven ignition of the combustion surface of the strips, which otherwise might have caused an uncontrolled variation of the velocity of the shell.

Hitherto, the strips have usually been held together by means of threads which are sewn through the strips, see for instance SE-B-419.376.

However, it has turned out that such a bundling will not be able to withstand the stress that the shell is exposed to during environmental tests of the kind presenting both mechanic chocs and heat strain. Thus, the strip will, during such environmental tests, be deformed and will also be dislodged from their optimal locations in the charge room.

Another drawback of the known propellant powder charges is that the arrangement thereof in the shell necessitates a number of manual operations, where the operator often comes into a too close contact with the powder, which brings about the risk that nitro-glycerine may penetrate into the operator's blood.

SUMMARY OF THE INVENTION

The object of the invention is therefore to provide a projectile of the aforementioned kind, where the powder strips will be held in position, and will not be appreciably deformed even under hard environmental tests, and which makes possible an automatized mechanical arrangement of the strips into the projectile. This object will be achieved by providing the projectile according to the invention with the characterizing features of claim 1.

Further developments of the invention are set forth in the subclaims.

BRIEF DESCRIPTION OF THE DRAWINGS

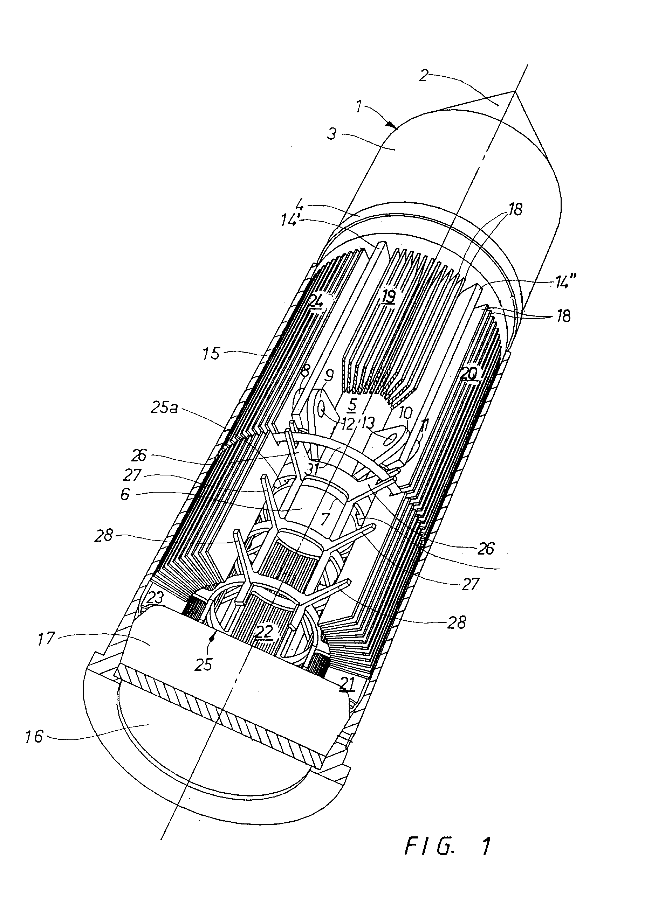

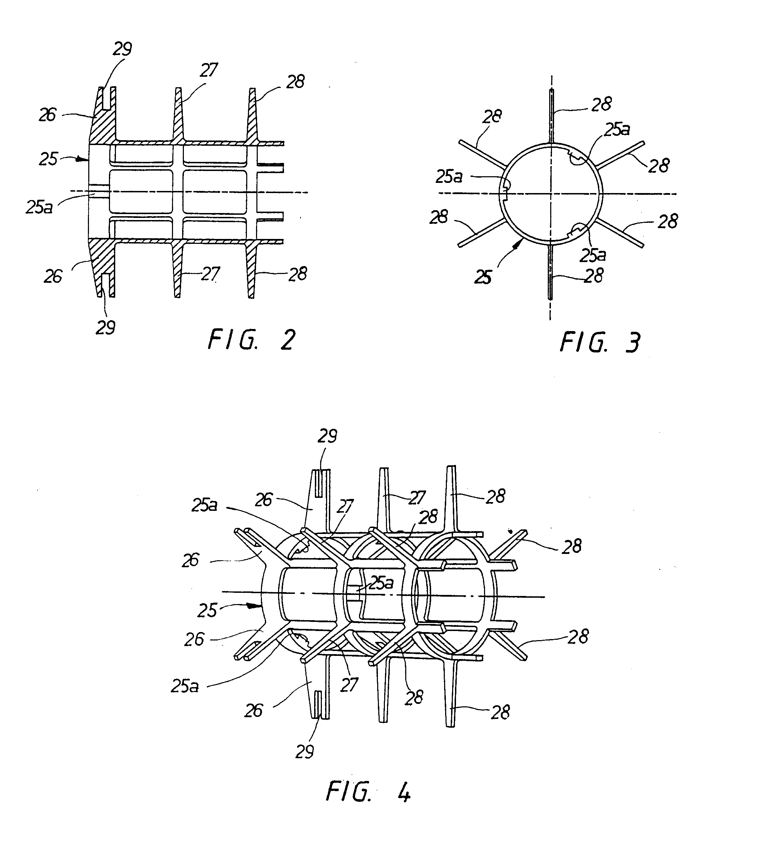

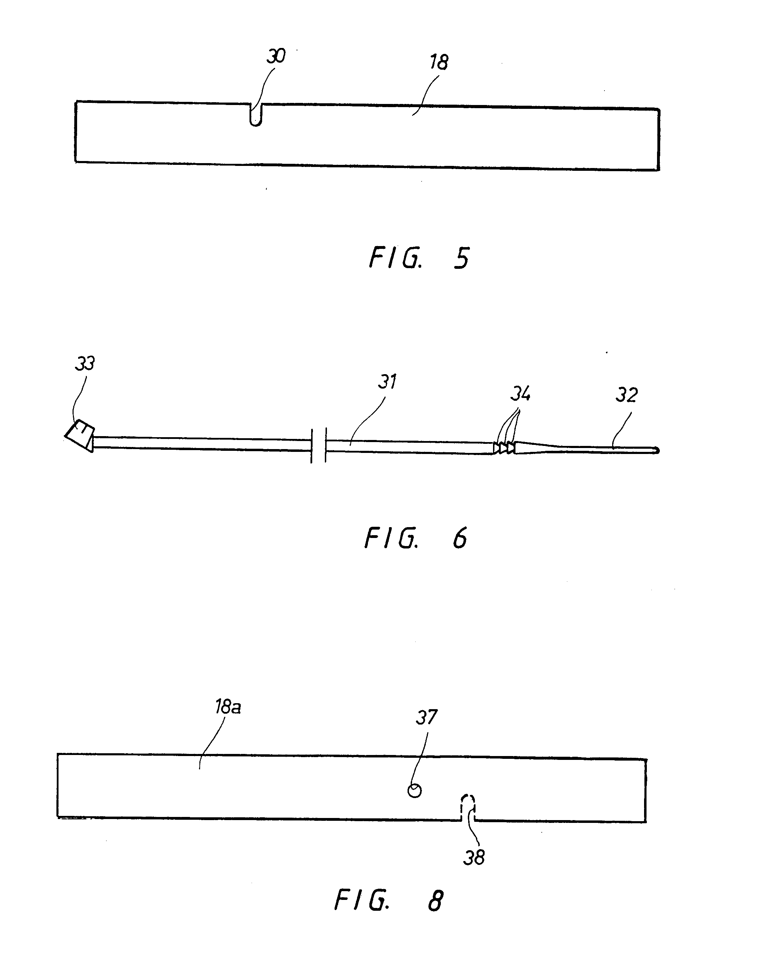

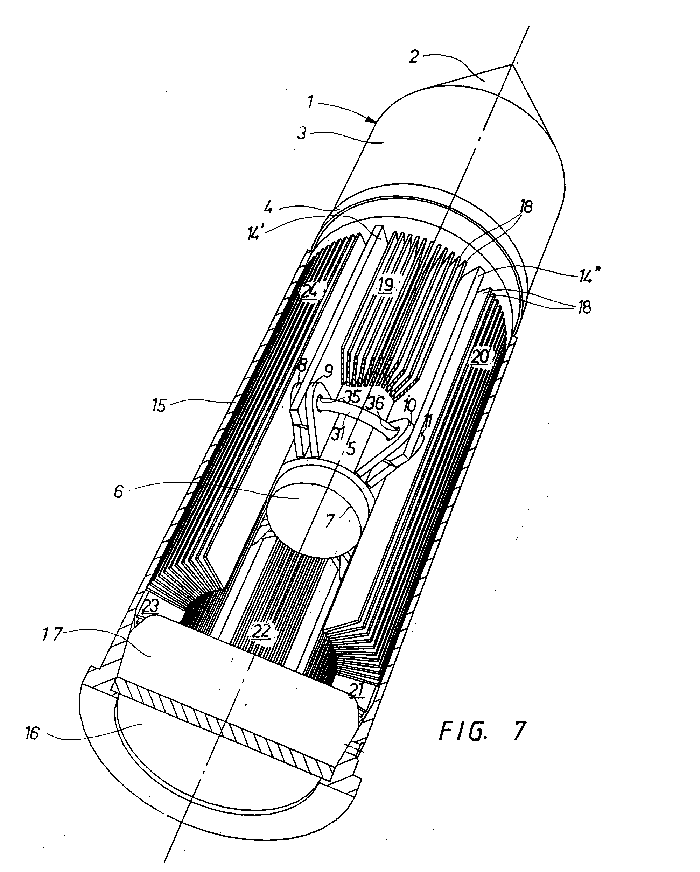

Fig. 1 is a perspective view, partially in section, of a shell according to the invention, fastened into a cartridge case. Figure 2 is a longitudinal section of a propellant powder support. Figure 3 and 4 is an end view and a perspective view, respectively, of the propellant powder support of Figure 2. Figure 5 is a lengthwise view of a powder strip for the shell according to the invention. Figure 6 is a lengthwise view of a locking ring. Figure 7 is a perspective view, partially in section, of an alternative embodiment of the shell of Figure 1. Figure 8 is a lengthwise view of a powder strip for the shell shown in Figure 7.

PREFERRED EMBODIMENT

Figure 1 illustrates a shell 1 with a nose portion 2, a cylindrical central portion 3 with a girdle 4, and a cylindrical tail portion 5, the diameter of which is approximately half of the diameter of the central portion 3. The tail portion 5 is terminated at its rear by a plane bottom 6, the circular outer edge of which is shown at 7 in Figure 1. The tail portion 5 has six fin holders equally circumferentially spaced around its shell surface, only two of the holders, however, being illustrated in Figure 1. The fin holders each consists of two ears 8, 9 and 10, 11, respectively, rigidly connected to the tail portion, and which ears support a joint 12 and 13, respectively, around which a stabilizing fin 14 is rotatably journalled so that it can be rotated from the folded inoperative position shown in Figure 1 to an unfolded, operative position (not shown). For reason of simplicity Figure 1 illustrates only two such fins 14' and 14'' of the six fins 14 which are present.

The shell 1 is in a way, not described in detail, mounted in a cartridge case 15, which in the embodiment shown is designed for a recoilless firing of a recoilless weapon, not shown. Therefore, the bottom of the case 15 is designed as a damming disc 16 in a way known per se. The case 15 has in its rear part a conventional ignition box 17, which, in a conventional manner, is designed, upon firing of the weapon, to ignite a propellant charge, described below, for expelling the shell out of the barrel of the weapon.

The cartridge case 15 forms a charge room extending a round the tail portion 5 and also extending at a distance behind the tail portion, the charge room being filled (except for a cylindrical portion coaxially around the length axis of the shell behind its tail portion 5) with said propellant charge in the form of elongated rectangular powder strips 18 orientated in the length direction of the shell (see also Figure 6), which strips are mounted in the charge room such that they protrude in between the fins 14 in parallel to the centre axis of the shell and such that the short edges of the strips will be directed substantially towards the centre axis of the shell. The strips 18 are, in way known but not shown, provided with spacer means in the form of warts or the like, which hold the strips at a suitable distance from one another.

Because the fins 14 extend into the charge room, compartments will thus be formed between the fins, each of the compartments being able to receive a bundle 19-24 of such powder strips 18. The bundle 19 is shown partially cut away in Figure 1 in order to more clearly show the other parts included in the invention. The charge room also extends substantially behind the tail portion 5 of the shell. In order to give the strips sufficient support in the part of the charge room which is located behind the tail portion 5, a powder strip support 25 is fastened to the shell behind the tail portion 5 coaxilly relative to this. The support 25, the configuration of which is best shown in Figures 2-4, consists of a hollow, cylindrical framework of combustible or breakable material, such as plastic or nylon. Alternatively, the support 25 may be manufactured of a pyrotechnic material, for instance powder, such that the support, during the combustion of the powder strips, will give an additional contribution to the powder gas pressure of the powder strips.

The support 25 has a slightly larger cylinder diameter than the tail portion 5, so that it can be drawn with one end, the inside of which has three elastic projections 25a, a short distance over the rear portion of the tail portion 5, so that the elastic projections 25a will be jammed against the shell surface of the tail portion, such that the support 25 will be positioned against the tail portion 5 and form a natural continuation rearwardly thereof.

The support 25 is also externally provided with three groups of six radial projections 26, 27 and 28, respectively, behind the fins and in line with these, so that the above mentioned compartments between the fins are continued rearwards by similar compartments between the projections 26-28, orientated in the length direction of the shell. The six projections of each such group have identical shape within the group, and are equally spaced around the support 25 in a common plane through the support 25.

The powder strips 18 have such a length that they fill out both the compartments between the fins 14 and the compartments between the projections 26-28.

The group 26 of radial projections located closest to the fins 14, and which are located in a common plane through the support 25, have, in a free end, a radial outwards directed recess 29. The powder strips 18 have also a corresponding recess 30, see Figure 5, located in register with corresponding recess 29. Thereby, the powder strips can be firmer positioned by applying a locking ring 31 through both the recesses 29 and 30, see Figures 1-6.

The locking ring 31 is made of a breakable or combustible material, for instance nylon, which, due to the combustion of the strips, will break or burn, whereby any remainder of the ring will be expelled from the weapon in order not to disturb a second firing of the weapon.

The locking ring 31 is shown in an extended position in Figure 6. It consists, in the embodiment shown, of a positioning ribbon, known per se, of nylon, and being bendable into the shape of a ring, one end 32 of the ribbon being insertable into a locking house 33 located at the other end of the ribbon. The end 32 is provided with a plurality of grooves 34, whereby a locking means (not shown) arranged in the housing 33 is by means of snap-action movable into engagement with a selected one of said grooves in order to bring about a locking of the ribbon in a desired tightened position.

The support 25 and its projections 26-28 can have identically the same configuration and function in a case where the shell has no fins. In that case the projections of the support may, however, be spaced in any other way around the periphery of the support, since it is then not necessary to adapt the position of the projections to any fins.

As an example of dimensions of the powder strips 18, these may have a length of about 200 mm, a width of about 15 mm and a thickness of about 0.4-1.0 mm. The locking ring 31 may have a maximal cross sectional dimension of about 2-3 mm.

The arranging of the powder strips 18 in the above mentioned compartments, and the applying of the locking ring 31 can readily be done automatically and mechanically by suitable tools.

According to an alternative embodiment of the invention, see Figures 7 and 8, the fins 14, the fin holders 8-11 and their joint 12, 13 thereof, have each a through bore (of which 35 and 36 are shown in Figure 7), permitting the locking ring 31 to be drawn therethrough instead of around the support 25. (The support 25 is for the sake of simplicity of the drawing omitted in Figure 7). The strips, denoted with reference numeral 18a in Figure 7, are for this purpose each provided with a through hole 37, see Figure 8, through which the locking ring 31 is drawn. The hole 37 may, alternatively, be replaced by a recess 38, such as is shown in dotted lines in Figure 8. However, holes are to be preferred instead of recesses, since a recess involves the risk that some strips may jump out of its engagement with the locking ring 31.

In the embodiment shown in Figures 7-8 the locking ring may be a metallic ring which remains intact in the fin holders in the trajectory of the shell outside the barrel. Alternatively, it may be in the form of a breakable or combustible ring, as in the embodiment of Figures 1-6.

If the fin holders lack through holes, or if the fins are in the form of non-foldable fins, the locking ring 31 may instead be drawn through a recess or a hole, not shown, in the fins. In that case, the locking ring must, if the fins are foldable, be made of a combustible or breakable material, so that it does not prevent the unfolding of the fins.

## Claims

1.  A projectile with propellant powder in the form of elongated powder strips (18) orientated in the length direction of the projectile in a charge room which extends, at least partially, behind the tail portion (5) of the projectile, **characterized** in that the powder strips (18) are held positioned in the charge room by a cylindric support (25) arranged coaxially behind the projectile (1) and able to be fastened to the tail portion (5) thereof, the support forming a natural continuation rearwards of the tail portion, the support having projections (26-28) forming therebetween compartments extending in the length direction of the projectile, each such compartment housing a plurality of said powder strips (18).

2.  A projectile according to claim 1, **characterized** by a locking ring (31) extending through all the compartments, and able to improve the positioning of the powder strips (18).

3.  A projectile according to claim 2, **characterized** in that each of the powder strips (18) has a hole (37) through which the locking ring (31) extends.

4.  A projectile according to claim 2, **characterized** in that each one of all of the projections (26) located in a predetermined radial plane through the projectile has a recess (29) for the locking ring (31), each one of the strips (18) also having a recess (30) in register with said recess of the projections, so that the locking ring is able to position the strips relative to the support (25).

5.  A projectile according to any preceding claim, **characterized** in that the projectile (1) has stabilizing fins (14) located in the charge room and dividing this into further compartments, the first mentioned compartments forming a natural continuation rearwards of the further compartments.

6.  A projectile according to claim 5, **characterized** in that the powder strips (18) extend into said further compartments.

FIG. 1

FIG. 2

FIG. 3

FIG. 4

*30* *18*

**FIG. 5**

*33* *31* *34* *32*

**FIG. 6**

*18a* *37*

*38*

**FIG. 8**

FIG. 7

**European Patent Office**

# EUROPEAN SEARCH REPORT

Application Number

**EP 91 20 1379**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 967 558 (BRODY F.A.)<br>* column 2, line 50 - column 3, line 18; figures 1,2 *<br>– – – | 1-3 | F 42 B 5/16<br>F 02 K 9/14 |
| A | DE-A-2 433 019 (ETAT FRANÇAIS)<br>* page 7, paragraph 5 - page 8, paragraph 5; figures 1,2 *<br>– – – – – | 1 | |

| | | | TECHNICAL FIELDS SEARCHED (Int. Cl.5) |
|---|---|---|---|
| | | | F 42 B<br>F 02 K |

The present search report has been drawn up for all claims

| Place of search | Date of completion of search | Examiner |
|---|---|---|
| The Hague | 30 September 91 | TRIANTAPHILLOU P. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document